# EUROPÄISCHE PATENTSCHRIFT

(11) **EP 2 715 086 B1**
(45) Veröffentlichungstag und Bekanntmachung des Hinweises auf die Patenterteilung: **21.02.2018**
(21) Anmeldenummer: 12724983.7
(22) Anmeldetag: 30.05.2012
(51) Int. Cl.: F02M 26/32, F28F 9/00, F02B 29/04, F28D 7/16, F28F 9/02, F28D 21/00

(54) **WÄRMEÜBERTRAGER**
HEAT EXCHANGER
ÉCHANGEUR DE CHALEUR

(30) Priorität: 31.05.2011 DE 102011076800
(43) Veröffentlichungstag der Anmeldung: 09.04.2014
(73) Patentinhaber: MAHLE Behr GmbH & Co. KG, 70469 Stuttgart (DE)
(72) Erfinder: BUCHER, Wolfgang, 70180 Stuttgart (DE); BRUNNER, Steffen, 71554 Weissach im Tal (DE); GESKES, Peter, 73760 Ostfildern (DE); HERBER, Achim, 71665 Vahingen an der Enz (DE); FABER, Christian, 70619 Stuttgart (DE); HETZ, Philipp, 05418-050 São Paulo - Pinheiros (BR); HUND, Simon, 70199 Stuttgart (DE); RÖSCHMANN, Timm, 71154 Nufringen (DE); SIEGEL, Albrecht, 71642 Ludwigsburg (DE); WEHRSTEDT, Wolfgang, 75417 Mühlacker (DE)
(74) Vertreter: Grauel, Andreas
(86) Internationale Anmeldenummer: PCT/EP2012/060118
(87) Internationale Veröffentlichungsnummer: WO 2012/163954

(56) Entgegenhaltungen:
- EP-A1- 1 795 854
- WO-A1-97/39301
- DE-A1-102005 005 190
- DE-T5-112007 001 061
- FR-A1- 2 772 875
- FR-A1- 2 908 833
- JP-A- 2001 272 193
- US-B1- 6 899 169

## Beschreibung

Die Erfindung betrifft einen Wärmeübertrager gemäß dem Oberbegriff des Anspruches 1 und eine Anordnung zur Rückführung und Kühlung von Abgas einer Brennkraftmaschine gemäß dem Oberbegriff des Anspruches 8. JP2001272193 offenbart einen derartiger Wärmeübertrager. Wärmeübertrager, insbesondere Abgaswärmeübertrager, werden für verschiedene technische Anwendungen zur Übertragung von Wärme von einem ersten Fluid auf ein zweites Fluid genutzt. Dabei durchströmt sowohl das erste als auch das zweite Fluid den Wärmeübertrager und die Wärme wird dabei von dem ersten auf das zweite Fluid oder umgekehrt übertragen. In einem Abgaswärmeübertrager wird Abgas als erstes Fluid durch eine Vielzahl von als Flachrohren ausgebildeten Rohren durchgeleitet. Um die Flachrohre herum wird dabei Kühlflüssigkeit als zweites Fluid geleitet. Damit wird von dem heißen Abgas Wärme auf die Kühlflüssigkeit übertragen und somit das Abgas gekühlt.

Abgaswärmeübertrager weisen im Allgemeinen ein Gehäuse, zwei Böden mit Öffnungen sowie eine Vielzahl von Rohren auf, deren Enden in den Böden angeordnet sind. Die Rohre mit den beiden Böden sind dabei innerhalb des Gehäuses angeordnet, so dass sich ein erster Strömungskanal in den Rohren für das Abgas und ein zweiter Strömungskanal zwischen den Rohren für die Kühlflüssigkeit in dem Wärmeübertrager bilden. Die Komponenten des Wärmeübertragers bestehen dabei im Allgemeinen aus Metall, insbesondere Aluminium oder Edelstahl, und sind vorzugsweise stoffschlüssig mittels Löten miteinander verbunden.

Aus der DE 10 2005 005 190 A1 ist eine Abgaskühleranordnung mit einem Gehäuse, in dem ein Wärmeübertragungsbereich angeordnet ist, und einem Stellorgan zur Regelung des Abgasstromes durch den Wärmeübertragungsbereich und/oder einem Bypasskanal bekannt. Das Gehäuse ist in Längsrichtung der Abgaskühleranordnung einteilig ausgebildet, wobei das Stellorgan im Gehäuse angeordnet ist.

Die EP 1 922 520 B1 zeigt einen Abgaswärmeübertrager mit einem Rohrbündel aus Abgasrohren und einem Bypasskanal. Ein Gehäuse ist von einem flüssigen Kühlmittel durchströmbar, wobei das Rohrbündel und der Bypasskanal jeweils in einen gemeinsamen Abgaseintrittsbereich münden, in welchem ein Abgasventil zur Steuerung des Abgasstromes durch das Rohrbündel oder den Bypasskanal angeordnet ist, wobei der Bypasskanal ein Edelstahlrohr mit einer Ummantelung aus hochtemperaturfestem Kunststoff ausgebildet und in dem von Kühlmittel durchströmbaren Gehäuse angeordnet ist.

Die DE 11 2007 001 061 T5 zeigt einen Wärmetauscher, der Folgendes aufweist: einen ersten Fluiddurchgang, der sich zwischen einem ersten Einlassanschluss und einem ersten Auslassanschluss erstreckt, einen zweiten Fluiddurchgang, der sich zwischen einem zweiten Einlassanschluss und einem zweiten Auslassanschluss erstreckt, wobei der erste und der zweite Fluiddurchgang gegenseitig abgedichtet sind, wenigstens eine Wärmeaustauschoberfläche, durch welche der erste und zweite Fluiddurchgang in einer Wärmetauschkommunikation miteinander sind, und wenigstens eine Elektrode, die in dem zweiten Fluiddurchgang angeordnet ist, wobei die wenigstens eine Elektrode mit einer Spannungsquelle verbunden ist, die während eines Einsatzes des Wärmetauschers eine Spannung an die wenigstens eine Elektrode anlegt, und wobei die Spannung von ausreichender Größer ist, um zu veranlassen, dass die wenigstens eine Elektrode ein nicht thermisches Plasma in den zweiten Fluiddurchgang erzeugt.

Die Aufgabe der vorliegenden Erfindung besteht deshalb darin, einen Wärmeübertrager und eine Anordnung zur Rückführung und Kühlung von Abgas einer Brennkraftmaschine zur Verfügung zu stellen, der bzw. die einfach und kostengünstig in der Herstellung ist und einen zuverlässigen Betrieb des Wärmeübertragers gewährleistet, insbesondere eine ausreichende Dichtheit aufweist.

Diese Aufgabe wird gelöst mit einem Abgas- oder Ladeluftwärmeübertrager, gemäß Anspruch 1. Insbesondere weist der Wärmeübertrager kein Stellorgan, z. B. eine Klappe, zur Steuerung und/oder Regelung der durch den ersten Strömungskanal leitbaren Menge an dem ersten Fluid auf und/oder der Wärmeübertrager weist keinen Bypasskanal zum Umleiten des ersten Fluides um die Rohre auf.

In einer weiteren Ausgestaltung weist der Wärmeübertrager keine Elektrode, z. B. zur Erzeugung eines, vorzugsweise nichtthermischen, Plasmas, auf. Zweckmäßig weist der Wärmeübertrager keine Elektrode auf, die mit einer Spannungsquelle verbunden ist, so dass während eines Einsatzes des Wärmeübertragers keine Spannung an die Elektroden übertragbar ist. Der Wärmeübertrager ist somit nicht geeignet zur Behandlung des ersten Fluides, insbesondere Abgas, insbesondere durch Erzeugung eines nichtthermischen Plasmas.

In einer ergänzenden Ausführungsform entspricht der Durchmesser des ersten und/oder zweiten Diffusors senkrecht zu einer Längsachse der Rohre im Wesentlichen dem Durchmesser des Gehäusemantels senkrecht zu der Längsachse an den Rohren, vorzugsweise jeweils in der gleichen Richtung senkrecht zu der Längsachse der Rohre. Im Wesentlichen bedeutet dabei, dass sich der Durchmesser des ersten und/oder zweiten Diffusors nur mit einem Unterschied von weniger als 30 %, 20 %, 10 %, 5 % oder 2 % vom Durchmesser des Gehäusemantels unterscheidet. Dabei wird der Durchmesser des Gehäusemantels vorzugsweise im Bereich des ersten und/oder zweiten Bodens erfasst oder gemessen. Erfindungsgemäß ist der erste Diffusor von einem ersten Deckel verschlossen und/oder der zweite Diffusor ist von einem zweiten Deckel verschlossen. Der erste und/oder zweite Diffusor ist im Querschnitt analog wie der Gehäusemantel ausgebildet, da der erste und/oder zweite Diffusor einteilig mit dem Gehäusemantel ausgebildet ist. An dem ersten und/oder zweiten Diffusor ist die Ein- und Auslassöffnung für das erste Fluid ausgebildet, so dass ein erster und/oder zweiter Deckel erforderlich ist, um eine Ein- und/oder Auslassöffnung für das erste Fluid mit einer wesentlich kleineren Strömungsquerschnittsfläche zu erhalten als die Strömungsquerschnittsfläche am ersten und/oder zweiten Diffusor ist. Weiter erfindungsgemäß ist die erste Einlassöffnung an dem ersten Deckel oder dem ersten Diffusor ausgebildet und vorzugsweise ist an dem ersten Deckel mit der ersten Einlassöffnung ein erster Einlassstutzen ausgebildet und/oder die erste Auslassöffnung ist an dem zweiten Deckel oder dem zweiten Diffusor ausgebildet und vorzugsweise ist an dem zweiten Deckel mit der ersten Auslassöffnung ein erster Auslassstutzen ausgebildet. Mittels des ersten Einlassstutzens oder des ersten Auslassstutzens kann das Abgas besonders einfach in den Wärmeübertrager ein- oder ausgeleitet werden bzw. eine Leitung besonders einfach mit dem ersten Ein- oder Auslassstutzen verbunden werden.

Zweckmäßig ist die zweite Einlassöffnung und/oder die zweite Auslassöffnung an dem Gehäuse ausgebildet und an der zweiten Ein- und/oder Auslassöffnung ein, vorzugsweise gefräster oder tiefgezogener, Stutzen angeordnet ist und vorzugsweise ist unter Vorspannung der Stutzen mit dem Gehäuse an der zweiten Ein- und/oder Auslassöffnung verbunden und vorzugsweise ist der Stutzen mit dem Gehäuse mit einer Dichtung, insbesondere O-Ringdichtung, fluiddicht verbunden. Die Vorspannung zwischen dem Stutzen und dem Gehäuse ist im Wesentlichen vorzugsweise senkrecht oder parallel zu der Strömungsrichtung des durch die Ein- und/oder Auslassöffnung strömenden zweiten Fluides ausgebildet. Dabei wird bei der Herstellung der Stutzen in eine Öffnung, d. h. die Ein- oder Auslassöffnung in dem Gehäusemantel, eingeschoben und anschließend wird mittels eines Rollierwerkzeuges die Vorspannung zwischen dem Stutzen und dem Gehäuse hergestellt sowie vorzugsweise ein Kragen hergestellt, um eine größere Auflagefläche zwischen dem Stutzen und dem Gehäuse zu erhalten.

In einer weiteren Ausführungsform ist die zweite Einlassöffnung und/oder die zweite Auslassöffnung an dem Gehäuse ausgebildet und an der zweiten Ein- und/oder Auslassöffnung ist ein elastischer Stutzen, insbesondere Gummistutzen, angeordnet. An der Ein- und/oder Auslassöffnung wird bei der Herstellung, vorzugsweise mittels Tiefziehen, ein Durchzug hergestellt und anschließend in die Ein- und/oder Auslassöffnung für das zweite Fluid, insbesondere Kühlflüssigkeit, der elastische Stutzen eingeschoben. Zwischen dem Gehäuse bzw. dem Gehäusemantel und dem elastischen Stutzen ist eine Wassersammelleiste angeordnet, so dass dadurch der elastische Stutzen unter Vorspannung bzw. Druck zwischen der Wassersammelleiste und dem Gehäusemantel an der Ein- und/oder Auslassöffnung für das zweite Fluid aufliegt und eine fluiddichte Verbindung mittels des elastischen Stutzens gewährleistet ist.

Insbesondere sind die Komponenten des Wärmeübertragers miteinander verlötet und/oder verschweißt und/oder die Komponenten des Wärmeübertragers bestehen wenigstens teilweise, insbesondere vollständig, aus Metall, vorzugsweise Aluminium oder Edelstahl. Die Komponenten des Wärmeübertragers sind beispielsweise das Gehäuse, d. h. der Gehäusemantel, der erste und/oder zweite Boden, die Rohre, der erste und/oder zweite Deckel, der erste und/oder zweite Einlassstutzen und/oder der Stutzen.

In einer ergänzenden Variante ist die erste Einlassöffnung für das erste Fluid, insbesondere Abgas, an dem ersten Diffusor ausgebildet und/oder die erste Auslassöffnung für das erste Fluid, insbesondere Abgas, ist an dem zweiten Diffusor ausgebildet.

Zweckmäßig sind in dem ersten Strömungskanal innerhalb des ersten und/oder zweiten Diffusors Umlenkbleche angeordnet.

Erfindungsgemäße Anordnung zur Rückführung und Kühlung von Abgas einer Brennkraftmaschine, insbesondere eines Dieselmotors, umfassend eine Abgasleitung, vorzugsweise mit einer Abgasturbine, eine Ladeluftleitung mit einem, vorzugsweise von der Abgasturbine antreibbaren, Ladeluftverdichter, eine Abgasrückführleitung zur Leitung von Abgas von der Abgasleitung zu der Ladeluftleitung, einen Abgaswärmeübertrager zur Kühlung von Abgas in der Abgasrückführleitung und/oder einen Ladeluftwärmeübertrager zur Kühlung von Ladeluft in der Ladeluftleitung in Strömungsrichtung der Luft nach dem Ladeluftverdichter, vorzugsweise ein Abgassteuerorgan zur Steuerung und/oder Regelung der durch die Abgasrückführleitung leitbaren Menge an Abgas pro Zeiteinheit und/oder vorzugsweise ein Ladeluftsteuerorgan zur Steuerung und/oder Regelung der durch die Ladeluftleitung leitbaren Menge an Ladeluft pro Zeiteinheit, wobei der Abgaswärmeübertrager und/oder der Ladeluftwärmeübertrager als ein in dieser Schutzrechtsanmeldung beschriebener Wärmeübertrager ausgebildet ist.

In einer weiteren Ausgestaltung sind innerhalb der Rohre Turbulenzeinlagen angeordnet. Die Turbulenzeinlagen, beispielsweise Leitbleche, dienen dazu, für die Strömung des ersten Fluides durch die Rohre eine turbulente Strömung zu erzeugen, zur Erhöhung der Wärmeübertragung von dem ersten Fluid auf das zweite Fluid oder umgekehrt.

In einer weiteren Ausgestaltung sind zwischen den Rohren Rippen oder Turbulenzeinlagen, d. h. innerhalb des zweiten Strömungskanales, insbesondere für die Kühlflüssigkeit, angeordnet. Dadurch soll möglichst eine turbulente Strömung beim Umströmen der Rohre mittels des zweiten Fluides, insbesondere der Kühlflüssigkeit, erzielt werden.

Im Nachfolgenden werden Ausführungsbeispiele der Erfindung unter Bezugnahme auf die beigefügten Zeichnungen näher beschrieben. Es zeigt:
- Fig. 1: einen Teillängsschnitt eines Wärmeübertragers in einem ersten Ausführungsbeispiel,
- Fig. 2: eine Teilexplosionsdarstellung des Wärmeübertragers gemäß Fig. 1,
- Fig. 3: einen Teillängsschnitt des Wärmeübertragers in einem zweiten Ausführungsbeispiel und
- Fig. 4: einen Teillängsschnitt des Wärmeübertragers in einem dritten Ausführungsbeispiel.

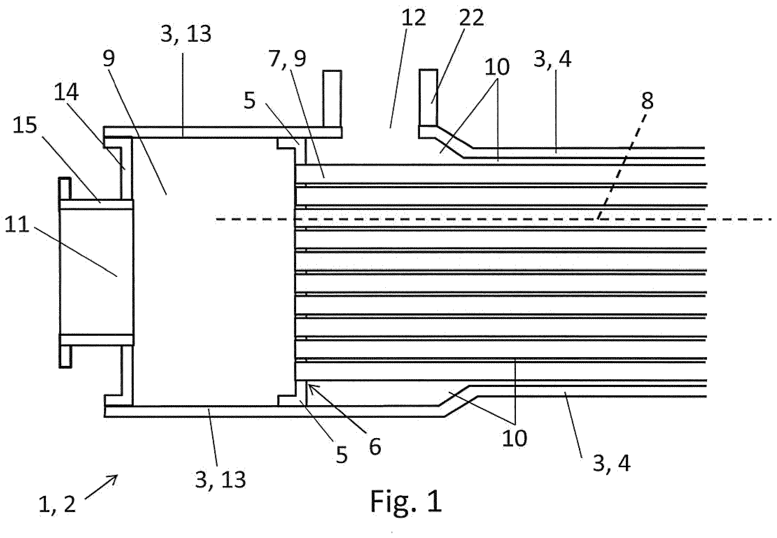

Ein als Abgaswärmeübertrager 2 ausgebildeter Wärmeübertragers 1 dient zur Kühlung von Abgas als erstes Fluid mittels Kühlflüssigkeit. Der Abgaswärmeübertrager 2 weist dabei einen ersten Strömungskanal 9 zum Durchleiten eines ersten Fluides, nämlich Abgas, auf. Ein zweiter Strömungskanal 10 zum Durchleiten eines zweiten Fluides, nämlich Kühlflüssigkeit, dient dazu, von dem Abgas Wärme auf die Kühlflüssigkeit zu übertragen und dadurch das Abgas zu kühlen (Fig. 1, 3 und 4). Der Abgaswärmeübertrager 2 wird dabei in einer nicht dargestellten Anordnung zur Rückführung und Kühlung von Abgas einer Brennkraftmaschine eingesetzt, um mittels Kühlflüssigkeit der Brennkraftmaschine das Abgas aus der Brennkraftmaschine zu kühlen und anschließend wieder nach dem Abkühlen in dem Abgaswärmeübertrager 2 einer nicht dargestellten Ladeluftleitung zuzuführen zur weiteren Verbrennung in einem Verbrennungsraum der Brennkraftmaschine.

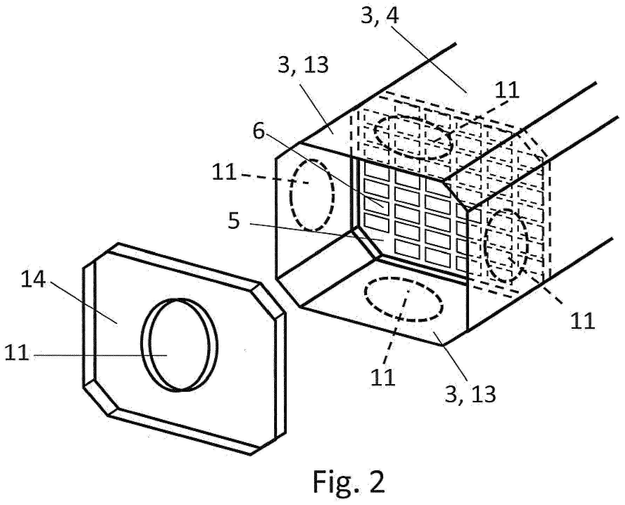

In Fig. 1 und 2 ist ein erstes Ausführungsbeispiel des Wärmeübertragers 1 dargestellt. Der Abgaswärmeübertrager 2 weist eine Vielzahl von Rohre 7 auf, die innerhalb eines Gehäusemantels 4 eines Gehäuses 3 des Abgaswärmeübertragers 2 angeordnet sind. Die Rohre 7 dienen zum Durchleiten von Abgas und ein Zwischenraum, der sich innerhalb des Gehäusemantels 4 ausbildet und außerhalb der Rohre 7 vorhanden ist, dient zur Durchleitung von Kühlflüssigkeit als zweites Fluid.

In dem in Fig. 1 dargestellten Längsschnitt des Wärmeübertragers 1 in dem ersten Ausführungsbeispiel ist lediglich im Wesentlichen die erste Hälfte des Wärmeübertragers 1 mit einer ersten Einlassöffnung 11 für Abgas als erstes Fluid und mit einer zweiten Einlassöffnung 12 für das zweite Fluid, nämlich Kühlflüssigkeit, dargestellt. Die andere, nicht dargestellte Hälfte des Wärmeübertragers 1 ist dabei analog zu der in Fig. 1 dargestellten Hälfte dargestellt und im Wesentlichen achsensymmetrisch hierzu. Lediglich die zweite Auslassöffnung (nicht dargestellt) für die Kühlflüssigkeit ist nicht wie die zweite Einlassöffnung 12 für die Kühlflüssigkeit oben, sondern die zweite Auslassöffnung für die Kühlflüssigkeit ist an der zweiten, nicht dargestellten Hälfte des Wärmeübertragers unten an dem Gehäusemantel 4 ausgebildet (nicht dargestellt). In den beiden Endbereichen des Gehäusemantels 4 ist jeweils ein erster Boden 5 und ein zweiter Boden fluiddicht mit dem Gehäusemantel 4 verbunden, z. B. mittels Löten oder Schweißen. Der erste Boden 5 und der zweite Boden (nicht dargestellt) weisen dabei eine Vielzahl von Öffnungen 6 auf, und in den Öffnungen 6 sind die Rohre 7 fluiddicht mit dem ersten und zweiten Boden 5 verbunden. Dadurch bildet sich innerhalb des Gehäusemantels 4 und außerhalb der Rohre 7 sowie zwischen dem ersten Boden 5 und dem zweiten Boden der zweite Strömungskanal 10 zur Durchleitung von Kühlflüssigkeit aus. Der Gehäusemantel 4 ist in Richtung einer Längsachse 8 der Rohre 7 über den ersten Boden 5 und den zweiten Boden hinaus verlängert, so dass diese Verlängerung des Gehäusemantels 4 auch einen ersten Diffusor 13 und den zweiten Diffusor bildet. Der erste Diffusor 13 ist von einem ersten Deckel 14 mit der ersten Einlassöffnung 11 verschlossen und in analoger Weise ist der zweiten Diffusor (nicht dargestellt) von einem zweiten Deckel mit einer ersten Auslassöffnung für das Abgas verschlossen. In der ersten Einlassöffnung 11 für das Abgas an dem ersten Deckel 14 ist ein erster Einlassstutzen 15 befestigt. In analoger Weise ist an dem zweiten Deckel an der ersten Auslassöffnung für das Abgas ein erster Auslassstutzen befestigt (nicht dargestellt). Dadurch bildet sich zwischen dem ersten Diffusor 13 und dem ersten Deckel 14 sowie dem ersten Boden 5 der erste Strömungskanal 9 für das Abgas aus und in diesen Raum wird das Abgas durch die Einlassöffnung 11 eingeleitet. Anschließend kann das Abgas durch diesen Raum in die Vielzahl von Rohre 7 einströmen und nach dem Durchleiten des Abgases durch die Rohre 7 strömt das Abgas in den von dem zweiten Diffusor und dem zweiten Deckel sowie den zweiten Boden eingeschlossenen Raum ein und anschließend aus der ersten Auslassöffnung an dem zweiten Deckel aus. An der zweiten Einlassöffnung 12 für die Kühlflüssigkeit ist ein Kühlmittelstutzen 22 angeordnet, z. B. insbesondere angelötet, und an der nicht dargestellten zweiten Auslassöffnung für die Kühlflüssigkeit ist in analoger Weise ein weiterer Kühlmittelstutzen 22 angeordnet.

Abweichend von der Ausbildung der ersten Einlassöffnung 11 für das Abgas an dem ersten Deckel 14 kann der erste Deckel 14 keine Einlassöffnung 11 aufweisen und abweichend hiervon kann die Einlassöffnung 11 an beispielsweise vier verschiedenen Bereichen des ersten Diffusors 13 ausgebildet sein. Diese Einlassöffnungen 11 sind in Fig. 2 strichliert dargestellt. Diese Ausbildung der Einlassöffnungen 11 an dem ersten Diffusor 13 bzw. der Verlängerung des Gehäusemantels 4, welche den ersten Diffusor 13 bildet, gilt auch analog für die Ausbildung der ersten Auslassöffnung an dem nicht dargestellten zweiten Diffusor.

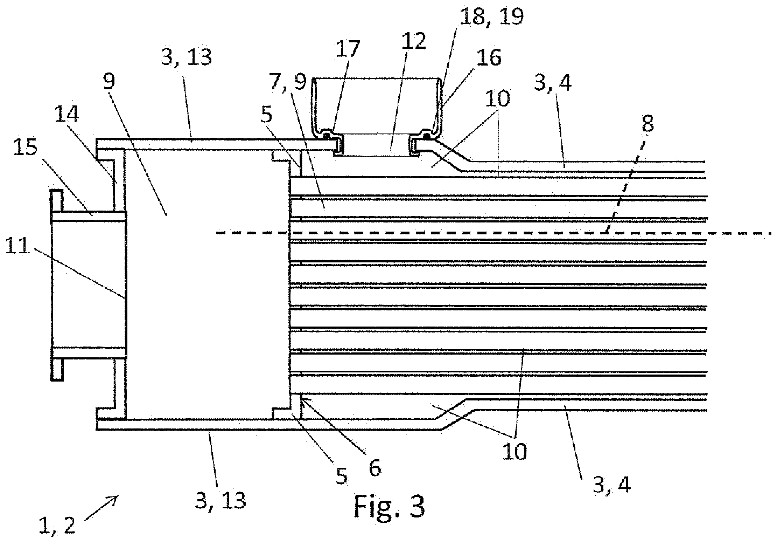

In Fig. 3 ist ein zweites Ausführungsbeispiel des Wärmeübertragers 1 dargestellt. Im Nachfolgenden werden im Wesentlichen nur die Unterschiede zu dem ersten Ausführungsbeispiel gemäß Fig. 1 und 2 beschrieben. An der zweiten Einlassöffnung 12 für die Kühlflüssigkeit ist ein Stutzen 16 aus Metall, z. B. Aluminium oder Edelstahl, angeordnet. Zur Befestigung des Stutzens 16 an der Einlassöffnung 12 wird der mittels Fräsen oder Tiefziehen hergestellter Stutzen 16 in diese zweite Einlassöffnung 12 eingeschoben und anschließend mittels eines Rollierwerkzeuges ein Kragen 17 sowohl an der Außenseite des Gehäusemantels 4 als auch an der Innenseite des Gehäusemantels 4 hergestellt. Zusätzlich wird aufgrund der Verbindung zwischen dem Stutzen 16 und dem Gehäusemantel 4 im Bereich der zweiten Einlassöffnung 12 mittels des Rollierwerkzeuges eine Vorspannung zwischen dem Stutzen 16 und dem Gehäusemantel 4 hergestellt. Ferner ist an dem Stutzen 16 eine Ringnut ausgebildet und innerhalb der Ringnut ist eine als O-Ringdichtung 19 ausgebildete Dichtung 18 angeordnet. Aufgrund der Vorspannung zwischen dem Stutzen 16 und dem Gehäusemantel 4 liegt die O-Ringdichtung 19 unter einer Druckvorspannung auf der Außenseite des Gehäusemantels 4 auf und gewährleistet dadurch eine dauerhafte und fluiddichte Abdichtung des Stutzens 16 bezüglich des Gehäusemantels 4. Diese Ausbildung des Stutzens 16 für die Einlassöffnung 12 gilt in analoger Weise auch für einen Stutzen 16 an der zweiten Auslassöffnung für die Kühlflüssigkeit (nicht dargestellt).

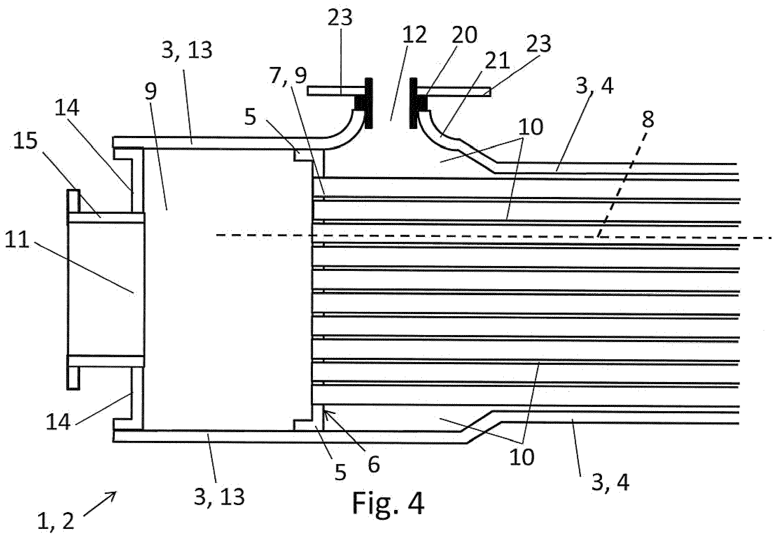

In Fig. 4 ist ein drittes Ausführungsbeispiel des Wärmeübertrages 1 dargestellt. Im Nachfolgenden werden im Wesentlichen nur die Unterschiede zu dem ersten Ausführungsbeispiel gemäß Fig. 1 und 2 beschrieben. An dem Gehäusemantel 4 ist im Bereich der zweiten Einlassöffnung 12 für Kühlflüssigkeit ein Durchzug 21, beispielweise mittels Tiefziehen hergestellt, ausgebildet. In die zweite Einlassöffnung 12 ist ein elastischer Stutzen 20 eingeschoben. Auf dem elastischen Stutzen 20 liegt eine Wassersammelleiste 23 eines Kraftfahrzeuges auf. Dabei ist der elastische Stutzen 20 zwischen der Wassersammelleiste 23 mit einer Öffnung und dem Gehäusemantel 4 im Bereich des Durchzuges 21 elastisch vorgespannt, so dass dadurch mittels des elastischen Stutzens 20 eine fluiddichte Verbindung zwischen der Wassersammelleiste 23 und dem Gehäusemantel 4 ausgebildet ist. Der Durchzug 21 kann nach dem Tiefziehen auch mittels eines Rollierverfahrens kalibriert werden, d. h. es kann eine höhere Fertigungsgenauigkeit des Durchzuges 21 erreicht werden. Vorzugsweise ist dabei die zweite Auslassöffnung (nicht dargestellt) für die Kühlflüssigkeit in analoger Weise wie die in Fig. 4 dargestellte zweite Einlassöffnung 12 mit dem elastischen Stutzen 20 ausgebildet.

Insgesamt betrachtet sind mit dem erfindungsgemäßen Wärmeübertrager 1 und der erfindungsgemäßen Anordnung zur Rückführung und Kühlung von Abgas einer Brennkraftmaschine wesentliche Vorteile verbunden. Der Wärmeübertrager 1 ohne Stellorgan für das Abgas und ohne einer Elektrode weist einen Gehäusemantel 4 als Gehäuse 3 auf, welcher sowohl den ersten Diffusor 13 als auch den zweiten Diffusor ausbildet, da der Gehäusemantel 4 über den ersten Boden 5 und den zweiten Boden hinaus verlängert ausgebildet ist. Dadurch können bei der Herstellung des Wärmeübertragers Kosten eingespart werden, weil keine zusätzlichen Bauteile für den ersten Diffusor 13 und den zweiten Diffusor erforderlich sind. Ferner ist auch keine Verbindung, insbesondere eine Löt- oder Schweißverbindung, zwischen dem ersten Diffusor 13 und dem zweiten Diffusor sowie dem Gehäusemantel 4 erforderlich.

### Bezugszeichenliste

- 1: Wärmeübertragers
- 2: Abgaswärmeübertrager
- 3: Gehäuse
- 4: Gehäusemantel
- 5: Erster Boden
- 6: Öffnungen in Boden
- 7: Rohre
- 8: Längsachse der Rohre
- 9: Erster Strömungskanal für Abgas
- 10: Zweiter Strömungskanal für Kühlflüssigkeit
- 11: Erste Einlassöffnung für Abgas
- 12: Zweite Einlassöffnung für Kühlflüssigkeit
- 13: Erster Diffusor
- 14: Erster Deckel
- 15: Erster Einlassstutzen
- 16: Stutzen
- 17: Kragen
- 18: Dichtung
- 19: O-Ringdichtung
- 20: Elastischer Stutzen
- 21: Durchzug
- 22: Kühlmittelstutzen
- 23: Wassersammelleiste

## Patentansprüche

1. Abgas- oder Ladeluftwärmeübertrager (2) umfassend: ein Gehäuse (3) mit einem Gehäusemantel (4), einen ersten Boden (5) und einen zweiten Boden mit Öffnungen (6), Rohre (7) als erster Strömungskanal (9) zum Durchleiten eines ersten Fluides, wie Abgas oder Ladeluft, deren Enden in oder an den Öffnungen (6) des ersten und zweiten Bodens (5) angeordnet sind, die Rohre (7) und der erste und zweite Boden (5) innerhalb des Gehäuses (3) angeordnet sind, so dass sich zwischen dem Gehäuse (3) und den Rohren (7) ein zweiter Strömungskanal (10) zum Durchleiten eines zweiten Fluides, wie eine Kühlflüssigkeit, ausbildet, eine erste Einlassöffnung (11) für das erste Fluid, eine erste Auslassöffnung für das erste Fluid, eine zweite Einlassöffnung (12) für das zweite Fluid, eine zweite Auslassöffnung für das zweite Fluid, einen ersten Diffusor (13) zum Einleiten des ersten Fluides in die Rohre (7), einen zweiten Diffusor zum Ausleiten des ersten Fluides aus den Rohren (7), wobei der erste und der zweite Diffusor (13) einteilig mit dem Gehäuse (3) ausgebildet ist, **dadurch gekennzeichnet, dass** der erste Diffusor (13) von einem ersten Deckel (14) verschlossen ist und der zweite Diffusor von einem zweiten Deckel verschlossen ist, wobei die erste Einlassöffnung (11) an dem ersten Deckel (14) ausgebildet ist und an dem ersten Deckel (14) mit der ersten Einlassöffnung (11) ein erster Einlassstutzen (15) ausgebildet ist und die erste Auslassöffnung an dem zweiten Deckel ausgebildet ist und an dem zweiten Deckel mit der ersten Auslassöffnung ein erster Auslassstutzen ausgebildet ist.

2. Abgas- oder Ladeluftwärmeübertrager nach Anspruch 1, **dadurch gekennzeichnet, dass** der Wärmeübertrager (1) kein Stellorgan, z. B. eine Klappe, zur Steuerung und/oder Regelung der durch den ersten Strömungskanal (9) leitbaren Menge an dem ersten Fluid aufweist und/oder der Wärmeübertrager (1) keinen Bypasskanal zum Umleiten des ersten Fluides um die Rohre (7) aufweist.

3. Abgas- oder Ladeluftwärmeübertrager nach einem oder mehreren der vorhergehenden Ansprüche, **dadurch gekennzeichnet, dass** der Wärmeübertragers (1) keine Elektrode, z. B. zur Erzeugung eines, vorzugsweise nichtthermischen, Plasmas, aufweist.

4. Abgas- oder Ladeluftwärmeübertrager nach einem oder mehreren der vorhergehenden Ansprüche, **dadurch gekennzeichnet, dass** der Durchmesser des ersten und/oder zweiten Diffusors (13) senkrecht zu einer Längsachse (8) der Rohre (7) im Wesentlichen dem Durchmesser des Gehäusemantels (4) senkrecht zu der Längsachse (8) an den Rohren (7) entspricht, vorzugsweis jeweils in der gleichen Richtung senkrecht zu der Längsachse (8) der Rohre (7).

5. Abgas- oder Ladeluftwärmeübertrager nach einem oder mehreren der vorhergehenden Ansprüche, **dadurch gekennzeichnet, dass** die zweite Einlassöffnung (12) und/oder die zweite Auslassöffnung an dem Gehäuse (3) ausgebildet ist und an der zweiten Ein- und/oder Auslassöffnung (12) ein, vorzugsweise gefräster oder tiefgezogener, Stutzen (16) angeordnet ist und vorzugsweise unter Vorspannung der Stutzen (16) mit dem Gehäuse (3) an der zweiten Ein- und/oder Auslassöffnung (12) verbunden ist und vorzugsweise der Stutzen (16) mit dem Gehäuse (3) mit einer Dichtung (18), insbesondere O-Ringdichtung (19), fluiddicht verbunden ist.

6. Abgas- oder Ladeluftwärmeübertrager nach einem oder mehreren der Ansprüche 1 bis 5, **dadurch gekennzeichnet, dass** die zweite Einlassöffnung (12) und/oder die zweite Auslassöffnung an dem Gehäuse (3) ausgebildet ist und an der zweiten Ein- und/oder Auslassöffnung (12) ein elastischer Stutzen (20), insbesondere Gummistutzen, angeordnet ist.

7. Abgas- oder Ladeluftwärmeübertrager nach einem oder mehreren der vorhergehenden Ansprüche, **dadurch gekennzeichnet, dass** die Komponenten (3, 5, 7, 13, 14, 15, 16, 22) des Wärmeübertragers (1) miteinander verlötet und/oder verschweißt sind und/oder die Komponenten (3, 5, 7, 13, 14, 15, 16, 22) des Wärmeübertragers (1) wenigstens teilweise, insbesondere vollständig, aus Metall, vorzugsweise Aluminium oder Edelstahl, bestehen.

8. Anordnung zur Rückführung und Kühlung von Abgas einer Brennkraftmaschine, insbesondere eines Dieselmotors, umfassend
- eine Abgasleitung, vorzugsweise mit einer Abgasturbine,
- eine Ladeluftleitung mit einem, vorzugsweise von der Abgasturbine antreibbaren, Ladeluftverdichter,
- eine Abgasrückführleitung zur Leitung von Abgas von der Abgasleitung zu der Ladeluftleitung,
- einen Abgaswärmeübertrager zur Kühlung von Abgas in der Abgasrückführleitung und/oder einen Ladeluftwärmeübertrager zur Kühlung von Ladeluft in der Ladeluftleitung in Strömungsrichtung der Luft nach dem Ladeluftverdichter,
- vorzugsweise ein Abgassteuerorgan zur Steuerung und/oder Regelung der durch die Abgasrückführleitung leitbaren Menge an Abgas pro Zeiteinheit und/oder vorzugsweise ein Ladeluftsteuerorgan zur Steuerung und/oder Regelung der durch die Ladeluftleitung leitbaren Menge an Ladeluft pro Zeiteinheit,
**dadurch gekennzeichnet, dass**
der Abgaswärmeübertrager und/oder der Ladeluftwärmeübertrager als ein Wärmeübertrager (1) gemäß einem oder mehreren der vorhergehenden Ansprüche ausgebildet ist.

## Claims

1. An exhaust gas or charge air heat exchanger (2), comprising: a housing (3) with a housing jacket (4), a first plate (5) and a second plate with openings (6), tubes (7) as a first flow duct (9) for conducting a first fluid, such as exhaust gas or charge air, the ends of which tubes are arranged in or on the openings (6) of the first and second plate (5), the tubes (7) and the first and second plate (5) are arranged within the housing (3) such that a second flow duct (10) for conducting a second fluid, such as a cooling liquid, is formed between the housing (3) and the tubes (7), a first inlet opening (11) for the first fluid, a first outlet opening for the first fluid, a second inlet opening (12) for the second fluid, a second outlet opening for the second fluid, a first diffuser (13) for the introduction of the first fluid into the tubes (7), a second diffuser for the discharge of the first fluid out of the tubes (7), wherein the first and the second diffuser (13) are formed integrally with the housing (3), **characterised in that** the first diffuser (13) is closed by a first cover (14) and the second diffuser is closed by a second cover, wherein the first inlet opening (11) is formed on the first cover (14) and a first inlet connector (15) is formed on the first cover (14) with the first inlet opening (11) and the first outlet opening is formed on the second cover and a first outlet connector is formed on the second cover with the first outlet opening.

2. The exhaust gas or charge air heat exchanger as claimed in claim 1, **characterised in that** the heat exchanger (1) does not have a final control element, for example a flap, for controlling and/or regulating the amount of the first fluid that can be conducted through the first flow duct (9), and/or the heat exchanger (1) does not have a bypass duct for diverting the first fluid past the tubes (7).

3. The exhaust gas or charge air heat exchanger as claimed in one or more of the preceding claims, **characterised in that** the heat exchanger (1) does not have an electrode, for example for generating a preferably non-thermal plasma.

4. The exhaust gas or charge air heat exchanger as claimed in one or more of the preceding claims, **characterised in that** the diameter of the first and/or second diffuser (13) perpendicular to a longitudinal axis (8) of the tubes (7) corresponds substantially to the diameter of the housing jacket (4) perpendicular to the longitudinal axis (8) at the tubes (7), preferably in each case in the same direction perpendicular to the longitudinal axis (8) of the tubes (7).

5. The exhaust gas or charge air heat exchanger as claimed in one or more of the preceding claims, **characterised in that** the second inlet opening (12) and/or the second outlet opening is formed on the housing (3) and a preferably milled or deep-drawn connector (16) is arranged on the second inlet and/or outlet opening (12), said connector (16) preferably being connected under preload to the housing (3) at the second inlet and/or outlet opening (12), the connector (16) preferably being connected to the housing (3) in a fluid-tight manner by way of a seal (18), in particular an O-ring seal (19).

6. The exhaust gas or charge air heat exchanger as claimed in one or more of claims 1 to 5, **characterised in that** the second inlet opening (12) and/or the second outlet opening is formed on the housing (3) and an elastic connector (20), in particular a rubber connector, is arranged on the second inlet and/or outlet opening (12).

7. The exhaust gas or charge air heat exchanger as claimed in one or more of the preceding claims, **characterised in that** the components (3, 5, 7, 13, 14, 15, 16, 22) of the heat exchanger (1) are brazed and/or welded to one another and/or the components (3, 5, 7, 13, 14, 15, 16, 22) of the heat exchanger (1) are composed at least partially, in particular entirely, of metal, preferably aluminium or high-grade steel.

8. An arrangement for the recirculation and cooling of exhaust gas of an internal combustion engine, in particular of a diesel engine, comprising
- an exhaust line, preferably with an exhaust gas turbine,
- a charge air line with a charge air compressor that can preferably be driven by the exhaust gas turbine,
- an exhaust gas recirculation line for conducting exhaust gas from the exhaust line to the charge air line,
- an exhaust gas heat exchanger for cooling exhaust gas in the exhaust gas recirculation line and/or a charge air heat exchanger for cooling charge air in the charge air line downstream of the charge air compressor as viewed in the flow direction of the air,
- preferably an exhaust gas control element for controlling and/or regulating the amount of exhaust gas that can be conducted through the exhaust gas recirculation line per unit of time, and/or preferably a charge air control element for controlling and/or regulating the amount of charge air that can be conducted through the charge air line per unit of time,
**characterised in that**
the exhaust gas heat exchanger and/or the charge air heat exchanger is designed as a heat exchanger (1) as claimed in one or more of the preceding claims.

## Revendications

1. Echangeur de chaleur de gaz d'échappement ou d'air de suralimentation (2) comprenant : un carter (3) ayant une enveloppe de carter (4), comprenant un premier fond (5) et un deuxième fond avec des ouvertures (6), comprenant des tubes (7) servant de premier conduit d'écoulement (9) pour la circulation d'un premier fluide, comme des gaz d'échappement ou de l'air de suralimentation, tubes dont les extrémités sont disposées dans ou sur les ouvertures (6) du premier et du deuxième fond (5), les tubes (7) et le premier et le deuxième fond (5) étant disposés à l'intérieur du carter (3), de sorte qu'un deuxième conduit d'écoulement (10) se forme entre le carter (3) et les tubes (7), ledit deuxième conduit d'écoulement servant à la circulation d'un deuxième fluide, tel qu'un liquide de refroidissement, ledit échangeur de chaleur comprenant une première ouverture d'admission (11) pour le premier fluide, une première ouverture d'échappement pour le premier fluide, une deuxième ouverture d'admission (12) pour le deuxième fluide, une deuxième ouverture d'échappement pour le deuxième fluide, un premier diffuseur (13) pour faire entrer le premier fluide dans les tubes (7), un deuxième diffuseur pour faire sortir le premier fluide des tubes (7), où le premier et le deuxième diffuseur (13) sont configurés en formant une seule et même pièce avec le carter (3), **caractérisé en ce que** le premier diffuseur (13) est fermé par un premier couvercle (14), le deuxième diffuseur étant fermé par un deuxième couvercle, où la première ouverture d'admission (11) est configurée sur le premier couvercle (14), et une première tubulure d'admission (15) est configurée sur le premier couvercle (14) ayant la première ouverture d'admission (11), et la première ouverture d'échappement est configurée sur le deuxième couvercle, et une première tubulure d'échappement est configurée sur le deuxième couvercle ayant la première ouverture d'échappement.

2. Echangeur de chaleur de gaz d'échappement ou d'air de suralimentation selon la revendication 1, **caractérisé en ce que** l'échangeur de chaleur (1) ne présente aucun actionneur, par exemple un volet, servant à la commande et / ou à la régulation de la quantité, qui concerne le premier fluide, pouvant être dirigée à travers le premier conduit d'écoulement (9), et / ou l'échangeur de chaleur (1) ne présente aucun conduit de dérivation servant à dévier le premier fluide autour des tubes (7).

3. Echangeur de chaleur de gaz d'échappement ou d'air de suralimentation selon l'une ou plusieurs des revendications précédentes, **caractérisé en ce que** l'échangeur de chaleur (1) ne présente aucune électrode, par exemple pour la production d'un plasma, de préférence non thermique.

4. Echangeur de chaleur de gaz d'échappement ou d'air de suralimentation selon l'une quelconque ou plusieurs des revendications précédentes, **caractérisé en ce que** le diamètre du premier et / ou du deuxième diffuseur (13), perpendiculairement à un axe longitudinal (8) des tubes (7), correspond pratiquement au diamètre de l'enveloppe de carter (4) perpendiculairement à l'axe longitudinal (8) sur les tubes (7), de préférence à chaque fois dans la même direction, perpendiculairement à l'axe longitudinal (8) des tubes (7).

5. Echangeur de chaleur de gaz d'échappement ou d'air de suralimentation selon l'une quelconque ou plusieurs des revendications précédentes, **caractérisé en ce que** la deuxième ouverture d'admission (12) et / ou la deuxième ouverture d'échappement est configurée sur le carter (3), et une tubulure (16), de préférence fraisée ou usinée par emboutissage profond, est disposée sur la deuxième ouverture d'admission et / ou d'échappement (12) et, de préférence, sous l'effet d'une précontrainte, la tubulure (16) est reliée au carter (3) au niveau de la deuxième ouverture d'admission et / ou d'échappement (12) et, de préférence, la tubulure (16) est reliée au carter (3), en étant étanche au fluide, avec un joint d'étanchéité (18), en particulier un joint torique d'étanchéité (19).

6. Echangeur de chaleur de gaz d'échappement ou d'air de suralimentation selon l'une quelconque ou plusieurs des revendications 1 à 5, **caractérisé en ce que** la deuxième ouverture d'admission (12) et / ou la deuxième ouverture d'échappement est configurée sur le carter (3), et une tubulure élastique (20), en particulier une tubulure en caoutchouc, est disposée au niveau de la deuxième ouverture d'admission et / ou d'échappement (12).

7. Echangeur de chaleur de gaz d'échappement ou d'air de suralimentation selon l'une quelconque ou plusieurs des revendications précédentes, **caractérisé en ce que** les composants (3, 5, 7, 13, 14, 15, 16, 22) de l'échangeur de chaleur (1) sont brasés et / ou soudés les uns aux autres et / ou les composants (3, 5, 7, 13, 14, 15, 16, 22) de l'échangeur de chaleur (1) se composent, au moins en partie, en particulier en totalité, de métal, de préférence d'aluminium ou d'acier spécial.

8. Agencement servant au recyclage et au refroidissement de gaz d'échappement d'un moteur à combustion interne, en particulier d'un moteur diesel, ledit agencement comprenant :
- une conduite de gaz d'échappement, de préférence comprenant une turbine à gaz d'échappement,
- une conduite d'air de suralimentation comprenant un compresseur d'air de suralimentation pouvant être entraîné de préférence par la turbine à gaz d'échappement,
- une conduite de recyclage des gaz d'échappement servant à diriger les gaz d'échappement depuis la conduite de gaz d'échappement jusqu'à la conduite d'air de suralimentation,
- un échangeur de chaleur de gaz d'échappement servant au refroidissement de gaz d'échappement en circulation dans la conduite de recyclage des gaz d'échappement et / ou un échangeur de chaleur d'air de suralimentation servant au refroidissement d'air de suralimentation en circulation dans la conduite d'air de suralimentation, dans la direction d'écoulement de l'air circulant en aval du compresseur d'air de suralimentation,
- de préférence un organe de commande des gaz d'échappement servant à la commande et / ou à la régulation de la quantité de gaz d'échappement par unité de temps, quantité qui peut être dirigée à travers la conduite de recyclage des gaz d'échappement, et / ou de préférence un organe de commande d'air de suralimentation servant à la commande et / ou à la régulation de la quantité d'air de suralimentation par unité de temps, quantité qui peut être dirigée à travers la conduite d'air de suralimentation,
**caractérisé**
**en ce que** l'échangeur de chaleur de gaz d'échappement et / ou l'échangeur de chaleur d'air de suralimentation est conçu comme un échangeur de chaleur (1) selon l'une quelconque ou plusieurs des revendications précédentes.
